# NEUE EUROPÄISCHE PATENTSCHRIFT

(11) **EP 2 188 230 B2**
(45) Veröffentlichungstag und Bekanntmachung des Hinweises auf die Entscheidung über den Einspruch: **18.11.2020**
(45) Hinweis auf die Patenterteilung: 12.11.2014
(21) Anmeldenummer: 07801591.4
(22) Anmeldetag: 10.08.2007
(51) Int. Cl.: C05D 9/00, C05F 9/04, C05F 11/02

(54) **VERFAHREN ZUR HERSTELLUNG VON HUMUS- UND NÄHRSTOFFREICHEN SOWIE WASSERSPEICHERNDEN BÖDEN ODER BODENSUBSTRATEN FÜR NACHHALTIGE LANDNUTZUNGS- UND SIEDLUNGSSYSTEME**
METHOD FOR THE PRODUCTION OF HUMUS- AND NUTRIENT-RICH AND WATER-STORING SOILS OR SOIL SUBSTRATES FOR SUSTAINABLE LAND USE AND DEVELOPMENT SYSTEMS
PROCÉDÉ DE PRODUCTION DE SOLS OU DE SUBSTRATS PÉDOLOGIQUES RICHES EN HUMUS ET EN NUTRIMENTS ET RETENANT L'EAU POUR DES SYSTÈMES DURABLES D'AMÉNAGEMENT FONCIER ET URBAIN

(43) Veröffentlichungstag der Anmeldung: 26.05.2010
(73) Patentinhaber: Palaterra Betriebs-und Beteiligungsgesellschaft mbH, 67822 Hengstbacherhof (DE)
(72) Erfinder: KRIEGER, Alfons-Eduard, 15345 Lichtenow (DE)
(74) Vertreter: Patentanwälte Dr. Keller, Schwertfeger Partnerschaft mbB
(86) Internationale Anmeldenummer: PCT/EP2007/007084
(87) Internationale Veröffentlichungsnummer: WO 2009/021528

(56) Entgegenhaltungen:
- EP-A- 0 168 556
- EP-A- 0 676 385
- WO-A-01/00543
- DE-A1- 1 929 195
- US-B1- 6 200 475
- US-B1- 6 223 687
- DATABASE WPI Week 200113 Derwent Publications Ltd., London, GB; AN 2001-115386 XP002477107 & JP 2000 313683 A (KYUSHU BIBITTO KK) 14. November 2000 (2000-11-14)
- DATABASE WPI Week 200682 Derwent Publications Ltd., London, GB; AN 2006-801538 XP002477108 & CN 1 820 577 A (LIU Z) 23. August 2006 (2006-08-23)
- DATABASE WPI Week 199950 Derwent Publications Ltd., London, GB; AN 1999-585763 XP002477109 & JP 11 255572 A (OKABE M) 21. September 1999 (1999-09-21)
- DATABASE WPI Week 200472 Derwent Publications Ltd., London, GB; AN 2004-732031 XP002481926 & JP 2004 284936 A (NIKKA JITSUGYO YG) 14. Oktober 2004 (2004-10-14)
- CHRISTOPH STEINER ET AL: "Long term effects of manure, charcoal and mineral fertilization on crop production and fertility on a highly weathered Central Amazonian upland soil" 2. Februar 2007 (2007-02-02), PLANT AND SOIL ; AN INTERNATIONAL JOURNAL ON PLANT-SOIL RELATIONSHIPS, KLUWER ACADEMIC PUBLISHERS, DO, PAGE(S) 275-290 , XP019507474 ISSN: 1573-5036 das ganze Dokument
- LAL R: "Agricultural activities and the global carbon cycle" 1. Oktober 2004 (2004-10-01), NUTRIENT CYCLING IN AGROECOSYSTEMS, KLUWER ACADEMIC PUBLISHERS, DO, PAGE(S) 103-116 , XP019241983 ISSN: 1573-0867 das ganze Dokument
- GLASER B ET AL: "Ameliorating physical and chemical properties of highly weathered soils in the tropics with charcoal - a review" BIOLOGY AND FERTILITY OF SOILS, BERLIN, DE, Bd. 35, April 2002 (2002-04), Seiten 219-230, XP003006697 ISSN: 0178-2762
- Vergleichversuch: K.-H. Röhren, 'Vergleichsversuche zur Verteidigung des Europäischen Patents EP 20 188 230 Versuchsbericht', 2017

## Beschreibung

Die vorliegende Erfindung betrifft ein Verfahren zur Herstellung von humus- und nährstoffreichen sowie wasserspeichernden Boden oder Bodensubstraten mit Eigenschaften anthropogener Bodenarten (Terra Preta) für nachhaltige Landnutzungs- und Siedlungssysteme. Bei dem Verfahren wird pyrogener Kohlenstoff und organische Biomasse einem Fermentationsprozess ausgesetzt.

### Technisches Gebiet

Die vorliegende Erfindung liegt auf dem Gebiet der Bodenherstellung und Bodenverbesserung für den nachhaltigen Einsatz in Landnutzungs- und Siedlungssystemen.

### Stand der Technik

Verschiedene Naturvölker und indianische Hochkulturen waren schon vor Jahrtausenden in der Lage, unfruchtbare und nährstoffarme Böden in außerordentlich produktive, fruchtbare Böden zu verwandeln, wie beispielsweise die Indianer-Schwarzerden (auch Terra preta de Indio genannt).

Um heute auf unfruchtbarem Boden Pflanzenkulturen zu bewirtschaften, betreiben einige Naturvölker Landrodung, bei der die Asche der niedergebrannten Bäume als Dünger wirkt. Auf diese Weise ist es möglich, die Felder immerhin bis zu mehreren Jahren zu bewirtschaften.

Das Geheimnis der Indianer-Schwarzerde (Terra Preta) liegt in deren Zusammensetzung und Herstellung. Historische Untersuchungen und wissenschaftliche Analysen ergaben, dass die frühen Naturvölker Holz in einem aufwändigen und heute nicht mehr erschlossenen Verfahren in Holzkohle verwandelten. Im Gegensatz zur Asche düngt jedoch Holzkohle nicht, sondern bindet Wasser und Nährstoffe im Boden. Daher sind mit Asche gedüngte Böden nach kurzer Zeit bereits nicht mehr kulturfähig, während die Böden mit Terra Preta über einen langen Zeitraum die Fähigkeit besitzen, Wasser und Nährstoffe im Boden zu halten und langsam an die Pflanzen abzugeben. Der hohe Holzkohleanteil der Schwarzerde verhindert, dass der Regen die Nährstoffe aus dem Boden wäscht. Mittlerweile wurden Zehntausende solcher natürlichen Terra Preta-Areale an verschiedenen Standorten auf der Welt verteilt entdeckt. Allen gemein ist, dass auf dieser schwarzen Erde Pflanzen wesentlich schneller wachsen und einen mehrfachen Ertrag erbringen.

Terra Preta kann man als ein solar beeinflusstes Fließgleichgewicht von organomineralischen Bodenkolloiden in Symbiosen von ein- und mehrzelligen Bodenlebewesen, höheren Pflanzen, Nutztieren und Menschen bezeichnen.

Die US 6200475 B1 beschreibt eine Vorrichtung und ein Verfahren zur Umsetzung von organischem Abfall mittels einer thermophilischen Gärung. Die Vorrichtung besitzt einen Behälter mit einem Mischer zur Durchführung des Gärprozesses. Das Gas wird mit einer Pumpe abgesaugt und die Temperatur in dem Behälter mit einer Heizvorrichtung eingestellt.

Die EP 0168556 A beschreibt die Herstellung eines Mittels zum Aufbau und zur Verbesserung des Kationenaustausches im Boden, welches ein Gemisch aus biologisch abbaubaren organischen Stoffen und ton-, kohle- und quarzhaltigen Stoffen enthält. Dieses Gemisch wird biologisch fermentiert. Eine Milchsäuregärung über die Vermengung von organischer Biomasse und Kohlenstoff wird nicht erwähnt.

Die JP 2000313683 A beschreibt die Herstellung eines organischen Bodendüngers, bei dem Kohlenstoff mit Fischabfall und Gärungsmikroben vermengt werden. Anschließend erfolgt eine Fermentierung und Trocknung.

Daneben sind im nächstliegenden Stand der Technik auch verschiedene Verfahren zur Herstellung von Bokashi und anderen Bodensubstraten unter aeroben oder anaeroben Bedingungen bekannt (Kyan T, Shintani M, Kanda S, Sakurai M, Ohashi H, Fujisawa A, Pongdit S (1999) Kyusei Nature Farming and The Technology of Effective Microorganisms, Guidelines for practical use. Ed. Sangakkara R, APNAN (Asia Pacific Natural Agriculture Net-work, Bangkok, Thailand), INFRC (International Nature Farming Research Center, Atami, Japan). Bei dem Verfahren kommt es zur Vermischung von pyrogenem Kohlenstoff und organischer Biomasse, Animpfung mit einer Starterkultur mit Mikroorganismen zur Durchführung einer Fermentation (EM) sowie Inkubation bei einer Temperatur zwischen 35 und 40°C.

Die KR 10 2004 0064488 A beschreibt ein Verfahren zur Herstellung von Boden oder Bodensubstraten mit den Schritten der Vermischung von pyrogenem Kohlenstoff und organischer Biomasse, Animpfung mit einer Starterkultur mit Milchsäurebakterien mit anschließender Inkubation für 15 bis 30 Tage. Dabei wird allerdings eine aerobe Fermentation durchgeführt.

Ein ähnliches Verfahren beschreibt die Herstellung von Boden oder Bodensubstraten mit den Schritten der Vermischung von pyrogenem Kohlenstoff und organischer Biomasse, Animpfung mit einer Starterkultur mit Mikroorganismen zur Durchführung einer Fermentation (G A Carandang, Herbana Farms, "Indigenous Microorganisms: Grow Your Own, Beneficial Indigenous Microorganisms and Bionutrients in Natural Farming", 2003).

Schließlich sind auch Maßnahmen bekannt, um überschüssiges Wasser über einen Ablauf zu entfernen, so dass die Fermentation nicht behindert wird (US 2004/0000179 A1).

Bis heute ist es nicht gelungen, die schwarzerdeähnliche anthropogene Bodenform von Terra Preta künstlich zu erzeugen. Ein Verfahren zur Herstellung dieser anthropogenen Bodenformen wäre aus unterschiedlichen Gründen wünschenswert, beispielsweise um weltweit nachhaltige Landnutzungssysteme aufzubauen, welche die Nahrungsversorgung der Menschen dauerhaft sichern, den lokalen Wasserhaushalt regulieren, Abwasser und Luft reinigen, und zur Hochwasserprävention und Klimaschutz beitragen. Zudem wäre die "Entsorgung" von organischen Siedlungsabfällen, welche den Menschen derzeit erhebliche Umweltprobleme bereiten, im Sinne einer ökologischen und ökonomischen Kreislaufwirtschaft gelöst.

Die Aufgabe der vorliegenden Erfindung besteht vor diesem Hintergrund darin, ein alternatives Verfahren zur Herstellung von Boden oder Bodensubstraten bereitzustellen, die Nährstoffe und Wasser dauerhaft speichern und daher länger fruchtbar sind.

Diese Aufgabe wird gelöst durch ein Verfahren mit den Merkmalen des Anspruchs 1.

### Zusammenfassung der Erfindung

Die vorliegende Erfindung betrifft ein Verfahren zur Herstellung von stabilen humus- und nährstoffreichen sowie wasserspeichernden Boden oder Bodensubstraten mit Eigenschaften anthropogener Bodenformen (Terra Preta), umfassend die Schritte:
(a) Vermischung von zerkleinertem und/oder gesiebtem pyrogenem Kohlenstoff mit zuvor zerkleinerter und homogenisierter leicht zersetzbarer organischer Biomasse,
(b) Animpfung des Gemisches durch Beimischung einer Starterkultur aus Mikroorganismen zur Durchführung einer Milchsäuregärung und/oder eine dem Milchsäuregärungsprozess ausgesetzte Biomasse,
(c) Inkubation des Gemisches zur Durchführung einer Milchsäuregärung bei einer Temperatur zwischen 30 und 40°C und einem pH-Wert, der in den sauren Bereich bis auf pH = 4 abgesenkt wird, in einer Fermenteranlage, wobei während des Fermentationsprozesses an der Fermenteranlage ein Ablauf zur Bodenentwässerung vorgesehen ist.

### Beschreibung der Erfindung

Die Erfindung betrifft ein Verfahren zur Herstellung von humus- und nährstoffreichen sowie wasserspeichernden Bodensubstraten mit Eigenschaften anthropogener Bodenarten, welche eine nachhaltig hohe Bodenfruchtbarkeit aufweisen. Die erfindungsgemäß hergestellte neue Bodenform basiert auf einem Verfahren, bei dem pyrogener Kohlenstoff und leicht zersetzbare organische Biomasse als Ausgangsmaterialien entweder in Behältern, einer Anlage, einer Bodenfläche, oder einer Kombination dieser Alternativen vermischt und anschließend einem Fermentationsprozess mit Hilfe von Mikroorganismen ausgesetzt werden.

In einer Ausführungsform können vor oder nach dem Fermentationsprozess natürliche Mineralstoffe, beispielsweise in Form von Dünger, Kalk, Mineralböden oder anderen mineralischen Bodensubstraten eingebracht werden. In einer weiteren Ausführungsform wird das so erhaltene Bodensubstrat mit Hilfe von Bodenlebewesen, wie Würmer, Milben etc., für eine ausreichende Zeitdauer umgesetzt, um ein Boden und/oder Bodensubstrat basierend auf neu gebildeten Ton-Humus-Komplexen zu erhalten.

Durch das erfindungsgemäße Herstellungsverfahren wird ein dauerhaft fruchtbares Bodensubstrat geschaffen, das auf der gezielten Herstellung von nährstoffreichen und wasserspeichernden Ton-Humus-Komplexen und Dauerhumus basiert.

Aus dem erfindungsgemäßen Verfahren geht ein Boden oder ein Bodensubstrat mit Eigenschaften anthropogener Bodenformen (Terra Preta) hervor.

Es sind ferner Nutzungs- und Anwendungsmöglichkeiten denkbar, welche gleichermaßen erst zu nachhaltigen Landnutzungs- und/oder Anwendungssystemen führen. Der erfindungsgemäß hergestellte oder behandelte Boden führt zu einer nachhaltig hohen Bodenfruchtbarkeit, so dass für eine wirtschaftliche Nutzung der Bodenfläche keine Mineraldüngung mehr erforderlich ist. Ferner eignet sich der Boden oder das Bodensubstrat als Bodenersatz, als Bodenergänzungsmittel, zur Begrünung von Siedlungen, zur Erosionshemmung, zur Verbesserung von regionalen Wasserhaushalten, zur Hochwasserprävention, zur Verminderung des Kohlendioxidgehaltes in der Atmosphäre (Klimaschutz), zur Schmutzwasserreinigung- und Aufbereitung, zur Abluftreinigung und Gebäudeluftreinigung, zur Schaffung von Stoffstromkreisläufen aus biogenen Abfällen und/oder Abwässern zur Entwicklung und Nutzbarmachung von Landnutzungs- und Siedlungssystemen.

Ausgangsmaterialien für die Herstellung der erfindungsgemäßen Bodenform sind pyrogener Kohlenstoff und leicht zersetzbare organische Biomasse.

Unter dem Begriff "pyrogener Kohlenstoff" versteht man die durch starke Erhitzung von organischem und vorzugsweise ligninhaltigem Material entstandenen Kohlenstoffstrukturen. Man findet pyrogenen Kohlenstoff beispielsweise in Form von Holzkohle, Siebrückständen von Holzkohle, Schwarzerde, Holzasche.

Eine Ausführungsform umfasst auch die geeignete Auswahl der Grund- und Ausgangsstoffe für die Herstellung des erfindungsgemäßen Bodens mit den erwünschten Eigenschaften. Dazu gehören z.B. organische Siedlungsabfälle, organische Abfälle aus Industrie, Gewerbe, Land- und Forstwirtschaft und Gartenbau sowie die ligninhaltigen Materialien, welche in Verbindung mit dem erfindungsgemäßen Verfahren zu einem vollständigen Kreislaufwirtschaftssystem führen. Dazu gehören auch die Entwicklung, Konzeption, Planung und Umsetzung von neuen, nachhaltigen Landnutzungs- und Siedlungssystemen, welche erst durch die erfindungsgemäße Technologie ermöglicht werden.

Um die verschiedenen Produkte und Zwischenprodukte der erfindungsgemäßen Bodenformen zu bezeichnen, werden folgende Bezeichnungen eingeführt. Das in einer ersten Herstellungsphase hergestellte, bereits als Bodensubstrat verwendbare Zwischenprodukt wird als "Terra Preta Humanidade Initial" bezeichnet. Terra Preta Humanidade Initial wird erhalten, indem die Ausgangsmaterialien pyrogener Kohlenstoff und organische Biomasse vermischt und anschließend fermentiert werden. Gegebenenfalls kann bei diesem Schritt auch die Zusetzung von natürlichen Mineralstoffen, wie Stickstoff, Phosphor, Kalium etc, beispielsweise in Form von Mineralboden, erfolgen. Terra Preta Humanidade Initial kann bereits als Bodensubstrat zum Bodenersatz, zur Bodenverbesserung oder zur Bodenergänzung verwendet werden.

Eine Weiterbehandlung der auf diese Weise erhaltenen Terra Preta Humanidade Initial führt zu einer weiteren Bodenform, die als "Terra Preta Humanidade Aktiv" bezeichnet wird. Hierbei wird die zuvor erwähnte Terra Preta Humanidade Initial mit Bodenlebewesen, wie beispielsweise Würmer und Milben, weiterbehandelt. Dies kann entweder in getrennten Anlagen, Behältern oder direkt auf der zur Bodenverbesserung zu behandelnden Freilandfläche erfolgen. Im letzteren Fall kann die Behandlung auch durch Einwanderung natürlicher Bodenlebewesen (z.B. Regenwürmer) erfolgen. Nach einer gewissen Zeitdauer unter Einwirkung der Bodenlebewesen ist aus der Terra Preta Humanidade Aktiv das Endprodukt "Terra Preta Humanidade" entstanden.

Kern der Erfindung ist die Zuführung von pyrogenem Kohlenstoff zu einem vorwiegend anaerob verlaufenden Fermentationsprozess, bei dem eine Fermentation eines organischen Biomassegemisches mittels Mikroorganismen (z.B. Bakterien, Pilze, Pilzsporen, Algen etc.) und eine Einlagerung von freigesetzten Nährstoffen und Mineralien in die pyrogenen Kohlenstoffstrukturen erfolgt.

Unter dem Begriff "Fermentierung" oder "Fermentation" im Sinne der Erfindung wird die Umsetzung von biologischen, insbesondere organischen Materialien mit Hilfe von Mikroorganismen (Bakterien, Pilzen, oder Zellkulturen) verstanden. Eine Fermentation kann aber auch durch den Zusatz von stoffwechselaktiven Enzymen oder anderen biologisch aktiven Molekülen (z.B. Nährstoffsubstrate der Mikroorganismen) erfolgen. Die Fermentation kann sowohl aerobe Vorgänge (z.B. Essigsäuregärung) als auch anaerobe Vorgänge (z.B. Milchsäuregärung) einschließen. Erfindungsgemäß erfolgt die Durchführung einer Milchsäuregärung.

Der Fermentationsprozess kann entweder in Behältern, Anlagen oder direkt auf der Freifläche stattfinden. Der Fermentationsprozess kann spontan mit den in der Biomasse natürlicherweise vorhandenen Mikroorganismen ablaufen. Alternativ können zur kontrollierten Steuerung des Prozesses und der Herstellung von Terra Preta Humanidade Initial Mikroorganismen oder Mischungen verschiedener Mikroorganismen (z.B. Bakterien, Pilze, Zellkulturen) als Starterkulturen zugegeben werden. Erfindungsgemäß erfolgt die Fermentation in einer Fermenteranlage.

Durch den unter Luftausschluss stattfindenden Fermentationsprozess entstehen humus- und nährstoffreiche sowie wasserspeichernde Ton-Humus-Komplexe, die vergleichbare Eigenschaften mit denen der natürlichen Terra Preta besitzen. Die so hergestellten nährstoffreichen sowie wasserspeichernden Ton-Humus-Komplexe sind chemisch und biologisch stabil und dienen als dauerhafter Kohlenstoffspeicher mit lang andauernder Bindungskapazität für Nährstoffe und Wasser.

Der pyrogene Kohlenstoff kann beispielsweise in Form von Holzkohle bzw. deren Siebrückständen, Holzasche usw. eingebracht werden und/oder durch einen Pyrolyseprozess in einer mobilen oder stationären Pyrolyseanlage aus vorwiegend ligninreichen organischen Materialien, wie Holz, Pflanzenstängel, Obstkernen, Nussschalen usw., gewonnen werden.

Vorzugsweise wird der Pyrolyseprozess unter Sauerstoffabschluss bei etwa 100 bis 1000 °C Grad betrieben. Der Fachmann versteht es jedoch, die entsprechenden Pyrolysebedingungen an die jeweiligen Gegebenheiten, wie der Art der Pyrolyseanlage, dem Umgebungsdruck, der Menge, Art und Beschaffenheit des Pyrolysegutes etc. anzupassen.

Zur Herstellung des pyrogenen Kohlenstoffes wird das ligninhaltige Material zuvor zerschnitten oder zerkleinert und vorzugsweise zu einem Pressling gepresst. Dies hat den Vorteil, dass der Pyrolyseprozess besser kontrollierbar ist und ein homogenes Pyrolyseprodukt entsteht, dass die anschließen Fermentation begünstigt. Ansonsten müsste für den Erhalt von pyrogenem Kohlenstoff das ligninhaltige Material (z.B. nach Rinden, Gräser, Holz etc.) entsprechend der Beschaffenheit zunächst getrennt werden bevor es dem jeweiligen Pyrolyseprozess zugeführt wird.

Neben dem pyrogenen Kohlenstoff entstehen beim Pyrolyseprozess weitere nutzbare Produkte, wie Öl, Holzteer oder Gas, welche beispielsweise zur Strom-, Wärme- und/oder Kälteproduktion eingesetzt werden können. Dadurch sind diese Nebenprodukte für eine sinnvolle Nutzung (z.B. zur Energiegewinnung) verwertbar und im Sinne der Erfindung für nachhaltige Landnutzungs- und Siedlungssysteme einsetzbar.

Die in der Pyrolyse entstehende warme Luft oder das Gas wird in einer bevorzugten Ausführungsform der Erfindung zur Optimierung des Fermentationsprozesses verwendet. Gegebenenfalls muss die aus der Pyrolyse stammende heiße Abwärme auf die für den Fermentationsprozess erforderliche Temperatur (30 bis 40 °C) abgekühlt werden.

In den Abgasen der Pyrolyse ist ferner Ammoniak, Kohlendioxid und Wasser enthalten, welche sich bei der Durchleitung durch den noch heißen pyrogenen Kohlenstoff in dessen Poren zu festem Ammoniumbikarbonat (Hirschhornsalz) umwandeln. Dieses Nebenprodukt kann wiederum als Langzeitdünger eingesetzt werden. Ein weiterer positiver Aspekt für die Durchleitung dieser Gase durch den noch heißen pyrogenen Kohlenstoff ist darin zu sehen, dass die Abgase der Pyrolyse gereinigt werden. Dadurch können etwaige anfallende schädliche Stoffe auf natürliche Weise durch den Pyrolyseprozess selbst eliminiert werden.

Bei einem bevorzugten Pyrolyseverfahren zur Herstellung von pyrogenem Kohlenstoff wird fein zerkleinertes Holz (auch mit Blattmasse) in einer Miete aufgesetzt, verdichtet, bewässert und weitgehend luftdicht, z. B. mit Erde, abgedichtet. Alternativ kann das Verfahren auch mit Fahrsilos oder in speziellen Behältern durchgeführt werden. Nach einiger Zeit setzt ein thermischer Rotteeffekt ein, bei dem im Inneren Temperaturen bis zu 80 °C entstehen. Als Hauptprodukt entsteht pyrogener Kohlenstoff, der dem Fermentationsprozess der Erfindung zugeführt werden kann. Bei dem Pyrolyseprozess kann ferner über einfache Wärmetauscher heißes Wasser mit einer Temperatur von etwa 60 °C gewonnen werden. Außerdem entsteht Leichtgas, das zur Energiegewinnung genutzt werden kann.

Dem Fachmann sind neben der Pyrolyse auch weitere Verfahren zur Herstellung von pyrogenem Kohlenstoff bekannt. Als Beispiel sei das Verfahren der hydrothermalen Karbonisierung genannt.

Der durch diverse Verfahren hergestellte pyrogene Kohlenstoff weist intramolekulare Kohlenstoffstrukturen auf, die beispielsweise durch die Pyrolysebedingungen beeinflusst werden können. Dadurch können die Eigenschaften des für das erfindungsgemäße Verfahren verwendeten pyrogenen Kohlenstoffs auf eine hohe Nährstoff- und Wasserspeicherkapazität angepasst werden.

Erfindungsgemäß wird der pyrogene Kohlenstoff vor der erfindungsgemäßen Verwendung zerkleinert und/oder gesiebt und mit der organischen Biomasse homogenisiert. Weitere erfindungsförderliche Modifikationen sind Bestandteil der bevorzugten Ausführungsformen. Der pyrogene Kohlenstoff kann beispielsweise mit Urin und/oder Harnstofflösung und/oder anderen harnstoffhaltigen Lösungen versetzt werden, um Stickstoff und Phosphor bereitzustellen, so dass die positiven Eigenschaften verstärkt werden.

Die für die Herstellung zu verwendende leicht zersetzbare organische Biomasse besteht vorzugsweise aus grünen Pflanzen und deren Resten, organischen Siedlungsabfällen, organischen Abfällen aus Industrie, Gewerbe, Land- und Forstwirtschaft und Gartenbau, wie Biomüll, Küchenabfälle, Grünschnitt, menschlichen oder tierischen Fäkalien, Gülle oder Fermentationsrückstände aus Biogasanlagen oder sonstige organische Materialien.

Dabei ist hinsichtlich einer nachhaltigen Landnutzung der Eintrag von Schwermetallen und toxischen Substanzen zu vermeiden. Grobe organische Biomasse kann vor dem Herstellungsprozess von Terra Preta Humanidade zerkleinert und/oder gesiebt und/oder mit dem pyrogenen Kohlenstoff homogenisiert werden.

Die zur Herstellung benötigten natürlichen Mineralstoffe können beispielsweise in Form von Mineralboden oder mineralischen Bodensubstraten entweder bereits in der Phase der Herstellung der Terra Preta Humanidade Initial zugeführt werden oder erst in der Phase der Flächenaufbringung von Terra Preta Humanidade Aktiv auf den Boden.

Der Mineralboden wird entweder in Behältern oder einer Anlage vor oder nach der Fermentation mit der organischen Biomasse und dem pyrogenen Kohlenstoff vermischt, oder direkt auf die zu behandelnde Fläche aufgebracht, oder ist bereits auf dem zu behandelnden Boden enthalten. Vorzugsweise werden die natürlichen Mineralböden zur Vermeidung von Transportkosten und/oder den umweltrelevanten Folgen von Transporten aus der Umgebung des Ortes der Herstellung gewonnen und/oder am Ort der Anwendung eingesetzt.

Die natürlichen Mineralstoffe (z.B. Stickstoff, Phosphor, Kalium) können als Dünger, Kalk oder in Form von Mineralboden oder anderen mineralischen Bodensubstraten (z.B. Tonsubstrate) zugeführt werden.

Wenn die Zuführung der natürlichen Mineralstoffe bereits in der Phase der Herstellung von Terra Preta Humanidade Initial erfolgt, kann zuvor eine Zerkleinerung und/oder Siebung der Mineralböden erforderlich sein. Auch eine Vermischung mit weiteren mineralischen Böden ist möglich.

Wie zuvor erwähnt wird in der ersten Herstellungsphase von Terra Preta Humanidade bereits als Bodensubstrat verwertbares Zwischenprodukt Terra Preta Humanidade Initial gewonnen. Dies geschieht vorzugsweise über die Vermischung der Ausgangsmaterialien pyrogener Kohlenstoff und leicht zersetzbare organische Biomasse und gegebenenfalls natürlicher Mineralstoffe oder Mineralboden oder mineralischer Bodensubstrate in einem geeigneten Mischungsverhältnis und die anschließende Einleitung eines Fermentationsprozesses. Die Menge an Mineralboden ist unkritisch. Allerdings sollten die Nährstoffe bestimmte Konzentrationen nicht übersteigen, um keine schädlichen Wirkungen hervorzurufen.

Das geeignete Mischungsverhältnis der Ausgangsmaterialien wird nach den Gehalten an Kohlenstoff, Wasser, Nährstoffen sowie nach dem pH-Wert, in Abhängigkeit von der Zusammensetzung der vor Ort verfügbaren Ausgangsmaterialien berechnet.

Vorzugsweise werden die Ausgangsstoffe pyrogener Kohlenstoff in einer Menge von mindestens 5 % und die organische Biomasse in einer Menge von mindestens 50% eingesetzt. Das bevorzugte Verhältnis liegt in einem Bereich von 10 bis 20 % pyrogener Kohlenstoff und 80 bis 90 % organischer Biomasse. Die Menge an Mineralstoffen wird je nach Bedarf und Anwendungsform des erfindungsgemäßen Bodens und Bodensubstrat beigemischt.

Vorzugsweise sollen sich die Werte der Terra Preta Humanidade im Bereich der folgenden Parameter bewegen:
Dichte: 1,3 - 1,4 g/cm3
Wassergehalt: ca. 25 %
Bodenluftgehalt: ca. 20 %
abschlemmbare Teilchen (kleiner 0,2 mm): mind. 500 g/kg
org. Kohlenstoff: ca. 40 g/kg, davon mind. 15 g/kg pyrogener Kohlenstoff
pH-Wert (H2O): ca. 5,5 bis 6,5
Stickstoff: mind. 2 g/kg
Phosphor: mind. 2 g/kg
C:N Verhältnis: ca. 15
Kationenaustauschkapazität: 150 mmol_{c}/kg

Die Mineralstoffe wurden bei diesem Beispiel bereits mit den Ausgangsstoffen vermischt. Der natürliche Mineralboden bzw. die natürlichen Mineralstoffe können in einer weiteren Herstellungsform auch erst später zugemischt und/oder im Verlaufe des Bodenbildungsprozesses (d. h. bei der Bildung von Terra Preta Humanidade aus Terra Preta Humanidade Aktiv) zugeführt werden.

Der Fermentationsprozess kann grundsätzlich in Behältern, Silos, Boxen, Mieten, Bodenmulden usw. durchgeführt werden, die aus verschiedenen Materialien, wie Beton, Stahl, Edelstahl, Kunststoff, Ton, Lehm, Keramik usw. bestehen können. Erfindungsgemäß wird er in einer Fermenteranlage durchgeführt.

Eine andere, von der Erfindung nicht umfasste, Möglichkeit besteht in der Flächenfermentation, wobei die Ausgangsmaterialien mit Kunststoffplatten, Folie und/oder einer mineralischen Dichtung möglichst luftdicht abgedichtet werden. Zur sicheren Gestaltung des Fermentationsprozesses werden nahezu anaerobe Milieubedingungen herbeigeführt.

Für die Erfindung relevant ist die Milchsäuregärung, bei der Zucker aus der Biomasse mit Hilfe von Mikroorganismen in Milchsäure umgewandelt wird. Für die Milchsäuregärung werden vorzugsweise homofermentative Bakterien, heterofermentative Bakterien, Bifidobakterien oder Kombinationen verschiedener fermentativer Stämme verwendet.

Durch die Gärung wird der pH auf einen Wert von bis zu 4 abgesenkt. Durch Zugabe von Mineralboden oder Kalk nach dem Fermentationsprozess kann der pH in dem Bodensubstrat wieder neutralisiert werden. Der Mineralboden oder Kalk hat also eine Doppelfunktion: Er dient einerseits als Mineralstofflieferant, andererseits als Puffersystem für den pH-Wert.

Zur sicheren Gestaltung des gewünschten Fermentationsprozesses kann in Abhängigkeit von den Ausgangsmaterialien eine biologische Starterkultur vorzugsweise aus ubiquitären Mikroorganismen beigemischt werden. In einer von der Erfindung nicht umfassten Variante kann auch bereits hergestellte Terra Preta Humanidade und/oder aus bereits einem Milchsäuregärungsprozess ausgesetzte Biomasse beigemischt werden.

Die Beimischung der biologischen Starterkulturen kann manuell und/oder automatisch bereits bei der Vermischung der Ausgangsmaterialien und/oder erst bei der Einbringung in die Fermentationsanlage und/oder erst in der Fermentationsanlage erfolgen.

Die Fermentation wird erfindungsgemäß bei einer Temperatur zwischen 30 und 40 ° C durchgeführt. Als Wärmequelle kann im Sinne einer nachhaltigen Wertschöpfungskette auf örtlich vorhandene überschüssige Wärme zugegriffen werden, wie sie beispielsweise beim Pyrolyseprozess, bei Vergärungsprozessen in Biogasanlagen, bei der Kompostierung und/oder beim Betrieb von Blockheizkraftwerken entsteht. Durch eine gesteuerte Fermentation, bei der die Milchsäuregärung und/oder weitere bakterielle und/oder fungale Aufschlüsse eine wesentliche Rolle spielen, werden die leicht umsetzbaren organischen Ausgangsmaterialien konserviert und gegen den mikrobiellen Abbau stabilisiert.

Die erfindungsgemäß bevorzugte Fermentationsdauer beträgt zwei bis sechs Wochen.

Durch die Fermentationsprozesse (z. B Milchsäuregärung) wird der pH-Wert in den sauren Bereich, d. h. bis auf pH = 4, abgesenkt. Diese pH-Absenkung bewirkt vorteilhaft, dass pathogene Mikroorganismen abgetötet werden, wodurch ein pathogenfreies Bodensubstrat erhalten wird. Die Anhebung des pH-Wertes erfolgt nach dem Fermentationsprozess durch die Zugabe von Mineralboden oder Kalk, wodurch eine Neutralisierung auf einen optimalen pH-Wert von 5 bis 6,5 erreicht wird.

Die so hergestellte Terra Preta Humanidade Initial kann bei kühlen Temperaturen für längere Zeit gelagert werden, ohne ihre Struktur wesentlich zu verändern.

In einer sich anschließenden bevorzugten zweiten Herstellungsphase zur Herstellung von Terra Preta Humanidade wird aus der zuvor beschriebenen Terra Preta Humanidade Initial eine Terra Preta Humanidade Aktiv gewonnen. Vorzugsweise geschieht dies durch die Einbringung und/oder Einwanderung von Bodenlebewesen, wie Regenwürmern, Kompostwürmern, Käfern, Milben. Dieser Prozess kann sowohl in den Behältern oder Fermenteranlagen stattfinden, in welchen zuvor die Terra Preta Humanidade Initial hergestellt wurde oder in speziellen Behältern oder Anlagen sowie auf offenen Bodenflächen.

Durch die Aktivitäten dieser höheren Bodenlebewesen entstehen stabile Ton-Humus-Komplexe sowie die Symbiosen von Mikro- und Makroorganismen. Dadurch kommt es zur weitgehenden organischen Festlegung von Pflanzennährstoffen und den Aufbau von komplexen physikalischen und chemischen Puffersystemen. Gasförmige und flüssige Nährstoffverluste werden somit vermieden und Kohlenstoff in hohem Maße akkumuliert. Es entsteht ein Ausgangssubstrat mit optimalen Lebensbedingungen für höhere Pflanzen.

Vorzugsweise wird der Prozess derart gestaltet, dass sich die höheren Bodenlebewesen optimal entwickeln können, wie beispielsweise durch Feuchtigkeits- und Temperaturregulierung.

Erfindungsgemäß ist auch die Zumischung von Kalk z.B. Algenkalk sinnvoll, um die Bodenbildungsprozesse zu optimieren.

Je nach Prozessbedingungen dauert die Herstellung von Terra Preta Humanidade Aktiv zwischen drei Monaten und einem Jahr.

Wenn nach dieser Zeit die Bodenbildungsprozesse der Terra Preta Humanidade Aktiv weitgehend fortgeschritten sind, kann davon ausgegangen werden, dass nunmehr Terra Preta Humanidade entstanden ist. Eine besondere Eigenschaft der Terra Preta Humanidade besteht darin, dass sie bei Eintrag organischer Biomasse weiter wächst d. h. dass die Kohlensstoffverbindungen und Mineralstoffe der Biomasse stabil und dauerhaft in das Bodengefüge eingebunden werden.

Zur Durchführung des erfindungsgemäßen Verfahrens kann eine stationäre oder mobile Vorrichtung verwendet werden, mit der es möglich ist, den erfindungsgemäßen Boden, wenn erwünscht vor Ort, herzustellen.

Die Vorrichtung umfasst erfindungsgemäß eine Fermenteranlage, in der mit Hilfe von Mikroorganismen eine Fermentation der Biomasse erfolgt. Die Fermenteranlage kann sowohl stationär als auch mobil betrieben werden. Ein modularer Aufbau der Fermenteranlage für die verschiedenen Herstellungsphasen ist ebenfalls möglich.

Die erfindungsgemäßen Fermenteranlagen verfügen über Einrichtungen, wie Drainagen, Bodenabläufe, Öffnungen usw., so dass ein kontrollierter Flüssigkeits- und Gasaustritt gewährleistet werden kann. Des Weiteren können die erfindungsgemäßen Fermenteranlagen über Einrichtungen verfügen, die einstellbare konstante Temperaturen während des Prozesses gewährleisten. Eine automatische Prozesssteuerung des Fermentationsprozesses kann über Messsensoren erfolgen, welche beispielsweise die Temperatur, den pH-Wert, den Kohlendioxidgehalt, den Methangehalt und/oder den Schwefelwasserstoffgehalt erfassen.

Die Vorrichtung umfasst ferner in einer bevorzugten Ausführungsform eine Pyrolyseanlage zur Herstellung von pyrogenem Kohlenstoff, in der die thermische Spaltung der chemischen Verbindungen des ligninreichen, organischen Materials unter Sauerstoffausschluss, d.h. unter nahezu anaeroben Verhältnissen stattfindet.

Vor der Pyrolyseanlage kann eine Zerkleinerungs- und Pressungsanlage vorgeschaltet sein, um aus unterschiedlichem ligninreichen Material eine Pressung zu erhalten. Ferner kann die Anlage eine Siebeinrichtung, wie z. B. einen Trommelsieb enthalten.

Ferner umfasst die erfindungsgemäße Fermenteranlage Einrichtungen, die es ermöglichen, dass die während der Pyrolyse erzeugte Abwärme der Fermenteranlage zur Optimierung des Fermentationsprozesses zugeführt wird.

Die erfindungsgemäß hergestellte Terra Preta Humanidade führt zu einer Steigerung der Bodenfruchtbarkeit über einen längeren Zeitpunkt, was z. B. durch die bislang erfolgte Einmischung von Asche, Holzkohle, Kompost, Gülle, Mist, Gärreste, Humus und/oder Kunstdünger in den Boden in diesem Umfang nicht erreicht werden kann.

Durch die Einlagerung von organischen Substanzen in die pyrogenen Kohlenstoffstrukturen wirkt die erfindungsgemäße Terra Preta Humanidade mit ihrer großen Oberfläche und geringen Abbaubarkeit als Langzeitspeicher und Puffersystem im Boden. Ferner wird eine schnelle Mineralisierung von der eingelagerten organischen Substanz und den Nährstoffen vermieden.

Die erfindungsgemäße Terra Preta Humanidade zeichnet sich durch ein stabiles biologisches Mikrosystem aus, bei dem biologische, physikalische und chemische Prozesse lange Zeit im Gleichgewicht sind. Dadurch eignet sie sich für aride und humide Landnutzungssysteme. Durch den Einsatz eines mobilen Pyrolyseofens und dem sich anschließenden Fermentationsprozess ist die Herstellung der erfindungsgemäßen Ton-Humus-Komplexe an nahezu jedem Ort der Erde möglich. Biomasse, die bislang nur verbrannt oder als Abfall (z. B. Grünschnitt, Gülle, Fäkalien, Bioabfälle der Städte) entsorgt wurde, kann wirtschaftlich genutzt werden.

Weiterhin können die künstlich erzeugten erfindungsgemäßen Ton-Humus-Komplexe bei großflächiger Anwendung eine bedeutende Rolle für den Klimaschutz haben. Pflanzen brauchen für ihr Wachstum das in der Atmosphäre gelöste Kohlendioxid, das sie der Luft entnehmen. Verkohlt man ligninreiche Biomasse und arbeitet den so gewonnenen pyrogenen Kohlenstoff nach erfolgter Fermentation in den Erdboden ein, entzieht man der Atmosphäre dauerhaft Kohlendioxid. Ebenso geschieht dies durch die Konservierung von Biomasse durch den Fermentationsprozess und die anschließende Einlagerung in Form von Dauerhumus.

Durch die wesentlich höhere Flächenproduktivität der erfindungsgemäßen Ton-Humus-Komplexe lassen sich darüber hinaus auch die klimarelevanten Treibhausgasemission von Methan und Lachgas aus landwirtschaftlichen Flächen reduzieren. Dem ökologischen Landbau und Erschließung von Nährstoffkreisläufen in hoch verdichteten globalen Räumen werden völlig neue Perspektiven eröffnet.

### Bevorzugte Nutzungs- und Anwendungsformen der Erfindung

Als erfindungsgemäß bevorzugte Nutzungs- und Anwendungsformen der Terra Preta Humanidade sowie der Zwischenprodukte Terra Preta Humanidade Initial und Terra Preta Humanidade Aktiv stehen zahlreiche Möglichkeiten und Varianten zur Verfügung.

Die erfindungsgemäß hergestellten Produkte können direkt auf den Boden oder die Fläche der zukünftigen Anwendung aufgebracht und/oder eingearbeitet und/oder in Dämmen aufgeschüttet werden. Falls die Herstellung von Terra Preta Humanidade Initial und/oder Terra Preta Humanidade Aktiv bereits auf den Flächen und/oder den Böden stattgefunden hat, kann auf die Aufbringung oder Einarbeitung verzichtet werden.

Eine erfindungsgemäße Nutzungsform für diese Anwendung besteht in der nachhaltigen Verbesserung der Bodenfruchtbarkeit z. B. zur Steigerung der gärtnerischen und/oder landwirtschaftlichen und/oder forstwirtschaftlichen Produktion und/oder im Verzicht auf künstliche Bodendüngung. Damit wäre global gesehen beispielsweise eine erhebliche Steigerung der Nahrungsmittelproduktion möglich, was wiederum zur weltweiten Hungerbekämpfung beitragen könnte. Durch die Steigerung der Flächenproduktivität von land- und forstwirtschaftlichen Böden würden sich zudem neue Möglichkeiten bei den erneuerbaren Energien z. B. durch Energiepflanzenproduktion bzw. Energiespeicherung durch grüne Pflanzen ergeben.

Eine weitere Anwendungsform ist die Einbringung von Terra Preta Humanidade, Terra Preta Humanidade Initial und/oder Terra Preta Humanidade Aktiv in Beeten, Pflanzgefäßen, Behältern, Atrien, Wintergärten, Gewächshäusern usw. beispielsweise zur Innenraumbegrünung, Siedlungs- und Gebäudebegrünung, Nutz- und Zierpflanzenanbau usw. Hierdurch werden beispielsweise für Architektur und/oder Städteplanung völlig neue Möglichkeiten zur Gestaltung und Kreislaufwirtschaftsmodelle geschaffen. Siedlungsabfälle, wie Biomüll, Abwasser, Fäkalien usw. können mit der erfindungsgemäßen Technologie in kleinen Kreisläufen eingebunden werden und zur Grüngestaltung, Nahrungsproduktion usw. beitragen.

Eine weitere Nutzungsform ist die Humusanreicherung und Stabilisierung von Böden z. B. in ariden oder humiden Gebieten zur Erosionshemmung und/oder Wasserspeicherung.

Eine weitere Nutzungsform besteht in der Verbesserung von Böden in Steppen- und/oder Wüstenregionen zur Eindämmung und/oder Rückbildung von Steppen- und Wüstengebieten. Durch eine gezielte Rekultivierung solcher Flächen mit standortgerechten Pflanzen könnte wiederum die Nahrungs- und/oder Energiepflanzenproduktion gesteigert werden.

Eine weitere Nutzungsform besteht in der Verbesserung der Wasseraufnahmekapazität von Böden und somit in der Verbesserung von regionalen Wasserhaushalten und in der Hochwasserprävention. Ein erheblicher Teil der weltweiten Ackerflächen sind aufgrund mangelnder Humusgehalte nicht in der Lage, größere Niederschlagswassermengen zu puffern bzw. zu speichern, sodass dieses relativ schnell in Bäche, Flüsse und Seen abfließt und hier unter Umständen zu Hochwasser führen kann. Gleichzeitig fehlt dieses Wasser im regionalen Wasserhaushalt. Die erfindungsgemäße Terra Preta Humanidade und/oder Terra Preta Humanidade Initial und/oder Terra Preta Humanidade Aktiv sind in der Lage, bis zu 200 Liter/qm Flüssigkeit aufzunehmen bzw. zu speichern. Somit können z. B. mit Terra Preta Humanidade bewirtschaftete Ackerflächen große Niederschlagsmengen aufnehmen und vorübergehend speichern. Das gespeicherte Wasser wird nun langsam an Pflanzen bzw. an das Grundwasser abgegeben, was den regionalen Wasserhaushalt ausgleicht und gleichzeitig Hochwasserprävention bedeutet.

Eine weitere Nutzungsform liegt in gezielten Beiträgen zum Klimaschutz. Dies geschieht allein schon durch eine flächendeckende Anwendung der Erfindung, weil Kohlenstoffverbindungen aus Biomasse in hohem Maße stabil in den Boden eingelagert werden und somit nicht als Kohlendioxid in die Atmosphäre gelangen, wie dies beispielsweise bei aeroben Abbauprozessen der Fall ist. Insbesondere in der Landwirtschaft entstehen durch Ausbringung von Gülle aus der Viehhaltung und/oder Gärresten aus Biogasanlagen erhebliche klimaschädliche Methan- und Lachgasemissionen. Durch eine gezielte Anwendung der Erfindung, z. B. bei der Einbindung dieser landwirtschaftlichen Biomassen in die Herstellung der erfindungsgemäßen Produkte und/oder durch Ausbringung dieser Biomassen auf mit Terra Preta Humanidade bewirtschafteten Ackerflächen, können klimaschädliche Methan- und Lachgasemissionen deutlich reduziert werden.

Eine weitere Nutzungsform liegt in der Anwendung im Bereich der Schmutzwasserreinigung und -Aufbereitung. Dabei können in einer bevorzugten Anwendung mit Terra Preta Humanidade bewirtschaftete Flächen mit Schmutzwasser häuslicher, kommunaler, gewerblicher und/oder landwirtschaftlicher Herkunft beaufschlagt werden. Die durch die Anwendung gesteigerte Akkumulationsfähigkeit der Flächen führt zu einer stabilen Einlagerung von Kohlenstoffverbindungen und Nährstoffen sowie zu einer Speicherung von Wasser. Dadurch eignen sich diese Flächen einerseits hervorragend für den Anbau von wasserzehrenden Nutzpflanzen z. B. als Energiepflanzenplantage mit Schilf und/oder Miscanthus und andererseits werden wertvolle Kohlenstofffraktionen und Nährstoffe aus dem Schmutzwasser sinnvoll und wertschöpfend genutzt, während sie bei der konventionellen Behandlung unter Energieeinsatz vernichtet werden.

Eine weitere Nutzungsform liegt in der Anwendung im Bereich der Abluftreinigung und Gebäudeluftaufbereitung. Dabei können in einer bevorzugten Anwendung mit Terra Preta Humanidade bewirtschaftete Flächen und/oder gefüllte Behälter, Beete, Anlagen usw. zur Reinigung von Abluft und/oder Aufbereitung von Gebäudeluft verwendet werden. In einer Variante wird die zu reinigende oder aufzubereitende Luft über Verteilereinrichtungen durch das Bodensubstrat geleitet und dabei von Mikroorganismen, Pilzen usw. in den Stoffwechsel aufgenommen und dabei in molekulare Einzelstrukturen zerlegt. Diese werden wiederum stabil im Bodensubstrat eingelagert und stehen Pflanzen zur Humus- und Nährstoffversorgung zur Verfügung. Eine neue Anwendungsform liegt in der gezielten Nutzung von mit Terra Preta Humanidade gefüllten Beeten, Pflanzbehältern, Anlagen usw. innerhalb und/oder außerhalb von Gebäuden zur Gebäudeluftaufbereitung und gleichzeitigen Begrünung. Dabei wird die Gebäudeluft über Vorrichtungen, wie z. B. Ventilatoren in die Verteilereinrichtungen der mit Terra Preta Humanidade gefüllten Beete, Pflanzbehälter, Anlagen usw. befördert, dort gereinigt und aufbereitet und anschließend über die Oberflächen und/oder Öffnungen wieder in die Gebäude zurückgeführt.

Eine weitere Nutzungsform liegt in der Anwendung im Bereich der Schaffung von Stoffstromkreisläufen aus biogenen Abfällen und/oder Abwässern aus unterschiedlichen Nutzungseinheiten, wie Einzelhaushalten, Gebäuden, Siedlungen, Ortschaften, Städten, Forst- und Landwirtschaft, Gartenbau, Gewerbe und Industrie. Mit der erfindungsgemäßen Technologie können zahlreiche biogene Abfälle und/oder Abwässer aus den jeweiligen Nutzungseinheiten innerhalb dieser behandelt, aufbereitet und z. B. zur Bodenverbesserung, Nahrungsbeschaffung, Energie- und Nutzpflanzenproduktion Wasser- und Luftreinigung usw. verwendet werden.

Dabei sind sowohl die Herstellung von Terra Preta Humanidade, Terra Preta Humanidade Initial und/oder Terra Preta Humanidade Aktiv mit den oben beschriebenen Anwendungsbereichen denkbar, als gleichermaßen auch die Entsorgung und gleichzeitige Verwertung von Siedlungsabfällen, Abwässern usw., welche oft zu erheblichen Umweltbelastungen führen können.

Demnach umfasst die Erfindung vorzugsweise auch die Auswahl der Grundstoffe für die Herstellung von Terra Preta Humanidade, Terra Preta Humanidade Initial und/oder Terra Preta Humanidade Aktiv z.B. organische Abfälle, Abwässer, Gärreste, Gülle, Grünschnitt, ligninhaltige Materialien, Aschen usw. welche in Verbindung mit dem erfindungsgemäßen Verfahren zu einem vollständigen Kreislaufwirtschaftssystem führen.

Zu einer weiteren denkbaren Anwendungsform gehört die Entwicklung, Konzeption, Planung und Umsetzung von neuen, nachhaltigen Landnutzungs- und Siedlungssystemen, welche erst durch die erfindungsgemäße Technologie ermöglicht werden.

### Beispiel

Das nachfolgende Beispiel und die Vergleichsbeispiele illustrieren die hier beschriebenen Varianten der Erfindung. Der Schutzumfang und die verschiedenen Ausführungsformen der Erfindung ergeben sich aus den Patentansprüchen.

### Beispiel 1:

Zerkleinerte und gesiebte Holzkohle wurde als pyrogener Kohlenstoff in einem Verhältnis von 1:4 mit zuvor zerkleinerter und homogenisierter organischer Biomasse aus Küchenabfällen, Grünschnitt, menschlichen oder tierischen Fäkalien in einem Behälter eingebracht. Anschließend erfolgte eine Animpfung des Gemisches mit einem Gemisch fermentationsaktiver Mikroorganismen als Starterkultur. Der Behälter wurde abgedeckt und für etwa vier Wochen stehen gelassen, um den Fermentationsprozess zu ermöglichen. Zur Bodenentwässerung war am Behälter ein Ablauf angebracht, um eine Versiffung zu vermeiden. Nach der Fermentationsdauer wurde dem Gemisch Mineralboden zugegeben und es erfolgte eine erneute Inkubation für 4 Wochen. Das so erhaltene Bodensubstrat wurde verpackt und gelagert. Zur Düngung wurde das Bodensubstrat auf eine Bodenfläche aufgebracht. Die so behandelte Fläche erwies sich als außerordentlich nährstoffhaltig und produktiv ähnlich den anthropogenen Böden wie Terra Preta.

### Vergleichsbeispiel 2:

Wie Beispiel 1, jedoch wurde die in der ersten Herstellungsphase erhaltene Terra Preta Humanidade Initial direkt auf eine zu behandelnde Bodenfläche aufgetragen und mit Mineralboden vermischt. Durch die Anwesenheit von Bodenlebewesen, wie Regenwürmer und Milben wurde die Terra Preta Humanidade Initial zu Terra Preta Humanidade Aktiv umgewandelt. Nach einer weiteren Umsetzungsdauer von wenigen Wochen erhielt man schließlich Terra Preta Humanidade als Endprodukt.

### Vergleichsbeispiel 3:

Wie Beispiel 2, jedoch erfolge der externe Zusatz von Bodenlebewesen in den Boden.

### Vergleichsbeispiel 4:

Wie Beispiel 3, jedoch wurden die Bodenlebewesen zu der Terra Preta Humanidade Initial in dem Behälter zugegeben und dort mit dem Bodensubstrat inkubiert. Die so erhaltene Terra Preta Humanidade wurde als Bodenergänzungsmittel auf die zu behandelnde Bodenfläche aufgebracht.

### Vergleichsbeispiel 5:

Zerkleinerte und gesiebte Holzkohle wurde als pyrogener Kohlenstoff in einem Verhältnis von 1:4 mit zuvor zerkleinerter organischer Biomasse aus Küchenabfällen, Grünschnitt, menschlichen oder tierischen Fäkalien, sowie zuvor gesiebten Mineralboden und einer Mischung fermentativer Mikroorganismen auf die zu behandelnde mineralstoffarme Bodenfläche aufgebracht. Anschließend wurde eine Flächenfermentation für sechs Wochen durchgeführt, indem die Fläche mit einer Silagefolie abgedeckt wurde, so dass nahezu anaerobe Zustände vorherrschten. Nach der Fermentationsdauer wurde die Silagefolie entfernt und Algenkalk aufgebracht und oberflächig eingearbeitet. Die Bodenfläche wurde mit Erde abgedeckt und für zwei Wochen ruhen gelassen, um eine Neutralisierung des pH-Wertes des Bodens und eine Einwanderung natürlicher Bodenlebewesen zu bewirken, die auch zu einer ausreichenden Vermischung beitrugen, so dass keine weitere Vermischung mehr erforderlich war. Nach etwa vier Wochen war der Boden bereit zur Bepflanzung.

### Vergleichsbeispiel 6:

Wie Beispiel 5, nur dass der pyrogene Kohlenstoff mit der zuvor zerkleinerten organischen Biomasse zur Flächenfermentation direkt auf Mineralboden aufgebracht wurde. Eine Einmischung von extern zugegebenen Bodenlebewesen war nicht erforderlich.

## Patentansprüche

1. Verfahren zur Herstellung von stabilen humus- und nährstoffreichen sowie wasserspeichernden Boden oder Bodensubstraten mit Eigenschaften anthropogener Bodenformen (Terra Preta), umfassend die Schritte:
(a) Vermischung von zerkleinertem und/oder gesiebtem pyrogenem Kohlenstoff mit zuvor zerkleinerter und homogenisierter leicht zersetzbarer organischer Biomasse,
(b) Animpfung des Gemisches durch Beimischung einer Starterkultur aus Mikroorganismen zur Durchführung einer Milchsäuregärung und/oder eine dem Milchsäuregärungsprozess ausgesetzte Biomasse,
(c) Inkubation des Gemisches zur Durchführung einer Milchsäuregärung bei einer Temperatur zwischen 30 und 40°C und einem pH-Wert, der in den sauren Bereich bis auf pH = 4 abgesenkt wird, in einer Fermenteranlage, wobei während des Fermentationsprozesses an der Fermenteranlage ein Ablauf zur Bodenentwässerung vorgesehen ist.

2. Verfahren nach Anspruch 1, **dadurch gekennzeichnet, dass** der pyrogene Kohlenstoff in einer Menge von mindestens 5 % und die organische Biomasse in einer Menge von mindestens 50 % eingesetzt werden.

3. Verfahren nach einem der vorhergehenden Ansprüche, **dadurch gekennzeichnet, dass** das Verfahren ferner den Schritt (d) umfasst, bei dem Bodenlebewesen, wie Regenwürmer, Kompostwürmer, Käfer, Milben etc., entweder dem Gemisch nach der Milchsäuregärung in der Fermenteranlage, in speziellen Behältern, Anlagen, oder direkt in den zu behandelnden Boden eingebracht oder aufgebracht werden, so dass natürlicherweise im Boden vorhandene Bodenlebewesen die Umsetzung und Weiterverarbeitung des Bodensubstrats bewirken können.

4. Verfahren nach einem der vorhergehenden Ansprüche, **dadurch gekennzeichnet, dass** zu dem Gemisch, dem Boden/Bodensubstrat oder der zu behandelnden Bodenfläche natürliche Mineralstoffe, Mineralboden, wie Dünger oder Kalk, oder andere mineralische Bodensubstrate beigemischt, eingebracht oder aufgebracht werden.

5. Verfahren nach einem der vorhergehenden Ansprüche, **dadurch gekennzeichnet, dass** der pyrogene Kohlenstoff in Form von Holzkohle, Siebrückständen von Holzkohle, Schwarzerde, Holzasche oder anderen pyrogenen Kohlenstoffstrukturen, oder Mischungen davon eingebracht wird.

6. Verfahren nach einem der vorhergehenden Ansprüche, **dadurch gekennzeichnet, dass** der pyrogene Kohlenstoff durch Pyrolyse oder einem hydrothermalen Karbonisierungsprozess gewonnen wird.

7. Verfahren nach einem der vorhergehenden Ansprüche, **dadurch gekennzeichnet, dass** der pyrogene Kohlenstoff vor dem oder im Schritt (a) mit Urin und/oder Harnstofflösung und/oder anderen harnstoffhaltigen Lösungen versetzt wird.

8. Verfahren nach einem der vorhergehenden Ansprüche, **dadurch gekennzeichnet, dass** als leicht zersetzbare organische Biomasse grüne Pflanzenreste, organische Siedlungsabfälle, organische Abfälle aus Industrie, Gewerbe, Land- und Forstwirtschaft und Gartenbau, insbesondere Biomüll, Küchenabfälle, Grünschnitt, menschliche oder tierische Fäkalien, Gülle oder Fermentationsrückstände aus Biogasanlagen oder sonstige organische Biomasse verwendet wird.

9. Verfahren nach einem der vorhergehenden Ansprüche, **dadurch gekennzeichnet, dass** die Milchsäuregärung für eine Dauer von etwa zwei bis sechs Wochen durchgeführt wird.

## Claims

1. A method for producing stable humus and nutrient-rich and water-storing clay-soil substrates having properties of anthropogenic soil forms (Terra Preta), comprising the following steps:
(a) mixing pulverized and/or sieved pyrogenic carbon with previously pulverized and homogenized easily decomposable organic biomass,
(b) inoculating the mixture by admixing a starter culture made of microorganisms to perform a lactic acid fermentation and/or a biomass subjected to the lactic acid fermentation,
(c) incubation of the mixture to perform a lactic acid fermentation at a temperature between 30°C and 40°C and a pH value in the acid range lowered to pH = 4, in a fermenter facility, wherein a controlled soil drainage is provided during the fermentation process at the fermenter facility.

2. The method according to claim 1, **characterized in that** the pyrogenic carbon is used in a quantity of at least 5% and the organic biomass is used in a quantity of at least 50%.

3. The method according to one of the preceding claims, **characterized in that** the method also comprises step (d), in which soil organisms, such as earthworms, compost worms, beetles, mites, etc. are introduced either into the mixture after the lactic acid fermentation in the fermenter facility, in special containers and facilities, or directly into or on the soil to be treated, so that soil organisms naturally present in the soil may cause the conversion and further processing of the soil substrate.

4. The method according to one of the preceding claims, **characterized in that** natural minerals, mineral soils, such as fertilizers or limestone, or other mineral soil substrates, such as clay substrates, are admixed, introduced, or applied to the mixture, the soil/soil substrate, or the surface to be treated.

5. The method according to one of the preceding claims, **characterized in that** the pyrogenic carbon is introduced in the form of charcoal, sieve residues of charcoal, black earth, wood ash, or other pyrogenic carbon structures, or mixtures thereof.

6. The method according to one of the preceding claims, **characterized in that** the pyrogenic carbon is obtained by pyrolysis or a hydrothermal carbonization process.

7. The method according to one of the preceding claims, **characterized in that** the pyrogenic carbon is admixed with urine and/or urea solution and/or other solutions containing urea before or in step (a).

8. The method according to one of the preceding claims, **characterized in that** green plant residues, organic municipal wastes, organic waste from industry, trade, agriculture and forestry and gardening, in particular biodegradable wastes, kitchen wastes, garden debris, human or animal feces, liquid manure, or fermentation residues from biogas facilities or other organic biomass is used as the easily decomposable organic biomass.

9. The method according to one of the preceding claims, **characterized in that** the lactic acid fermentation process is performed for a duration of approximately two to six weeks.

## Revendications

1. Procédé de production de sols ou de substrats pédologiques stables, riches en humus et en nutriments, stockant l'eau et dotés de propriétés de formes de sols anthropiques *(terra preta*), incluant les étapes suivantes :
(a) mélange de carbone pyrogène broyé et/ou tamisé et d'une biomasse organique aisément décomposable, préalablement broyée et homogénéisée,
(b) ensemencement du mélange par adjonction d'une culture de démarrage constituée de micro-organismes, en vue d'opérer une fermentation lactique, et/ou par une biomasse exposée au processus de fermentation lactique,
(c) incubation dudit mélange en vue d'opérer une fermentation lactique dans une installation de fermentation, à une température comprise entre 30 et 40 °C et à une valeur de pH abaissée jusqu'à pH = 4 dans la plage acide, une évacuation étant prévue au niveau de l'installation de fermentation, au cours du processus de fermentation, afin de drainer le sol.

2. Procédé selon la revendication 1, **caractérisé par le fait que** le carbone pyrogène et la biomasse organique sont utilisés, respectivement, en une quantité d'au moins 5 % et en une quantité d'au moins 50 %.

3. Procédé selon l'une des revendications précédentes, **caractérisé par le fait que** ledit procédé inclut, en outre, l'étape (d) durant laquelle des organismes vivant dans le sol tels que des vers de terre, des vers de compost, des insectes, des acariens, etc., sont introduits dans, ou déposés sur le mélange à l'issue de la fermentation lactique dans l'installation de fermentation, dans des conteneurs spécifiques, des dispositifs, ou bien directement dans ou sur le sol à traiter, de telle sorte que des organismes naturellement présents dans le sol puissent provoquer la transformation et le traitement ultérieur du substrat pédologique.

4. Procédé selon l'une des revendications précédentes, **caractérisé par le fait que** des substances minérales naturelles, un sol minéral tel que de l'engrais ou de la chaux, voire d'autres substrats pédologiques minéraux, sont ajoutés, introduits dans, ou déposés sur le mélange, le sol/le substrat pédologique ou la surface du sol devant être traitée.

5. Procédé selon l'une des revendications précédentes, **caractérisé par le fait que** le carbone pyrogène est introduit sous forme de charbon de bois, de résidus de tamisage du charbon de bois, de terre noire, de cendres de bois ou autres structures de carbone pyrogène, ou de mélanges de ces derniers.

6. Procédé selon l'une des revendications précédentes, **caractérisé par le fait que** le carbone pyrogène est obtenu par pyrolyse ou par un processus de carbonisation hydrothermale.

7. Procédé selon l'une des revendications précédentes, **caractérisé par le fait que**, préalablement à l'étape (a) ou lors de cette dernière, le carbone pyrogène est mélangé à de l'urine et/ou à une solution d'urée et/ou à d'autres solutions contenant de l'urée.

8. Procédé selon l'une des revendications précédentes, **caractérisé par le fait que** des résidus de plantes vertes, des déchets organiques urbains, des déchets organiques d'origines industrielle, artisanale, agricole, forestière et maraîchère, notamment des déchets biodégradables, des déchets de cuisine, des déchets verts, des matières fécales humaines ou animales, du lisier ou des résidus de fermentation émanant d'installations de biogaz, ou une biomasse organique de type autre, est (sont) utilisé(e)(s) en tant que biomasse organique aisément décomposable.

9. Procédé selon l'une des revendications précédentes, **caractérisé par le fait que** la fermentation lactique est opérée pour une durée d'environ deux à six semaines.
